# EUROPEAN PATENT APPLICATION

(11) **EP 4 588 837 A1**
(43) Date of publication of application: **23.07.2025**
(21) Application number: 24153042.7
(22) Date of filing: 22.01.2024
(51) Int. Cl.: B65G 1/04, B65G 1/137

(54) **ACCESS STATION**

(71) Applicant: AUTOSTORE TECHNOLOGY AS, 5578 Nedre Vats (NO)
(72) Inventor: Arvid, Pettersen, 5578 Nedre Vats (NO)
(74) Representative: Kilburn & Strode LLP

(57) **Abstract**

The disclosure relates to an access station for accessing a storage container of an automated storage and retrieval system, wherein the access station comprises: a panel with an access aperture providing access to a container compartment; a hatch system for opening and closing the access aperture of the panel, wherein the hatch system comprises: a hatch cover movable between a closed state in which the hatch cover is preventing access to the container compartment via the access aperture of the panel and an open state in which the hatch cover is allowing access to the container compartment via the access aperture of the panel; a crank having a first end and a second end, wherein the second end of the crank is reciprocating in an elongate guide which is attached to the hatch cover; and an actuator configured to move the hatch cover between the closed state and the open state by rotating the crank between a first position and a second position.

## Description

### TECHNICAL FIELD

The disclosure relates to an access station. More particularly, it relates to an access station comprising a panel and a hatch system, and a method of presenting storage containers in an access station.

### BACKGROUND

Traditional storage solutions usually involve the arrangement of goods on rows of shelves within a warehouse. The shelf location for each item is recorded in an inventory, and goods are retrieved from the shelves by a stock picker. The shelves are re-stocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A picking and/or packing station may be referred to as an access station. Access stations can provide access to bins coming from or going into the grid such that a user can add content to or remove content from the bins, and therefore the grid. Access stations may include a structure, for example a hatch, that allows a user to access the access station, but may also prevent the user accessing the access station. For example, it may be desirable to prevent the user from accessing the access station when there is no accessible box within the access station for safety reasons, such as to prevent the user from touching mechanisms inside the access station.

Known access stations may comprise large mechanisms, such as one or more belts to open hatches which cover any bins inside the access station. Such a belt mechanism requires a large amount of space between the hatch and the front of the access station and therefore requires a large distance between the user and the bin for when the user accesses any bins in the access station. Known access stations may also, or instead, require a large distance between the front side and rear side of the access station due to the size of the mechanism. This reduces the efficiency of transporting bins between the user and the grid. Such a mechanism also requires power to open and close the hatch.

It is also difficult to include safety mechanisms in access stations that include mechanisms such as belts. Safety mechanisms are desirable to protect the user when using the access station, for example an emergency release if the user gets a hand trapped inside the access station.

One or more aspects of the invention of the present application are set out in the claims.

### SUMMARY

In a first aspect, there is provided an access station for accessing a storage container of an automated storage and retrieval system, wherein the access station comprises: a panel with an access aperture providing access to a container compartment; a hatch system for opening and closing the access aperture of the panel, wherein the hatch system comprises: a hatch cover movable between a closed state in which the hatch cover is preventing access to the container compartment via the access aperture of the panel and an open state in which the hatch cover is allowing access to the container compartment via the access aperture of the panel; a crank having a first end and a second end, wherein the second end of the crank is reciprocating in an elongate guide which is attached to the hatch cover; and an actuator configured to move the hatch cover between the closed state and the open state by rotating the crank between a first position and a second position.

Such an access station and hatch system may provide for a reduced footprint of the access station and improved accessibility to a container.

Optionally, the hatch cover may be located at least partially below the panel in the open state. It may be achieved that no parts or at least no larger parts of the hatch system are located between the front panel and the top access aperture when the hatch cover is in the open state.

Optionally, the hatch cover maybe movable in a linear direction between its open state and close state. The hatch cover may be slidably connected to the panel. The hatch cover may be slidably connected to the panel by means of rollers. The travel plane may be aligned with the linear direction of the movement of the hatch cover.

Optionally, the hatch cover may rest on two sliding profiles both oriented parallel to the linear direction of the movable hatch cover. These sliding profiles support the hatch cover and guide movement of the hatch cover as it slides between the open and closed state.

Optionally, the elongate guide may be oriented with its longitudinal axis being perpendicular to the linear direction of the hatch cover. The elongate guide being perpendicular to the direction of the hatch cover allows ease of movement of the hatch cover in a linear direction compared to if the elongate guide was not perpendicular. This can improve the safety of the hatch system as it increases the resistance of the hatch cover when in the closed and/or open state such that the operator may not interfere with the mechanism of the hatch system.

Optionally, the elongate guide may be located along one edge of the hatch cover.

Optionally, the crank may be defined with a longitudinal axis between its first end and its second end. The longitudinal axis of the crank may be oriented perpendicular to the longitudinal axis of the elongate guide when the hatch cover is in the closed state. The longitudinal axis of the crank maybe oriented perpendicular to the longitudinal axis of the elongate guide when the hatch cover is in the open state. An inherent lock of the hatch cover in its closed state may thereby be achieved, as it is may not be possible to force the hatch cover open by pulling/pushing the hatch from the closed state to the open state due to the crank forming a rigid member between the elongate guide and the actuator in the direction of the required movement. Similarly, an inherent lock of the hatch cover in its open state may also achieved. This improves the safety of the hatch system as it increases the resistance of the hatch cover when in the closed and/or open state such that the operator may not interfere with the mechanism of the hatch system.

Optionally, the access station may comprise a rear opening provided below the panel on a rear side of the access station, wherein storage containers are moved into and out from the container compartment of the access station via the rear opening.

Optionally, the rear opening may be provided in a plane parallel with the linear direction of the hatch cover. The panel may be a top panel of the access station. The rear opening may be provided at a height below the top panel. The storage containers may be moved between a column of the framework structure and the container compartment via the rear opening.

As used herein, the term "front side" refers to the side of the access station facing an operator of the access station. The operator maybe a human person or a robot, such as a picking robot. As used herein, the term "rear side" refers to the opposite side of the front side.

Optionally, the actuator may be a rotary actuator or a motor, such as an electric or servo motor. The actuator may be located adjacent to the container compartment. The actuator may be located at the same height as the container compartment. The actuator may be defined with a pivoting axis around which the crank is rotated between the first position and the second position. The pivoting axis may be perpendicular to the plane of the hatch cover and the plane of the travel. The crank may be rotated in a plane parallel to the travel plane of the hatch cover.

Optionally, the crank may be rotated up to 180° between the first position and second position. Rotating the crank 180° may give the advantage of being able to fully move the storage container through the access aperture of the panel. Instead if the crank rotates less than 180°, this could stop the operator being able to remove the storage container from the access aperture of the panel. This could improve the safety of the access station for the user, as it minimizes exposure of the operator to the hatch system mechanism.

Optionally, the hatch cover may move faster near the closed state and near the open state, and that the hatch cover may move relatively slower near the halfway between the closed state and the open state.

Optionally, the elongate guide may comprise a groove, and the second end of the crank may be provided with a sliding element slidingly engaged in the groove. This allows for a smoother mechanism of the hatch system.

Optionally, the second end of the crank may be located in a first end position of the elongate guide when the crank is in the first position and when the crank is in the second position and the second end of the crank may be located in a second end position of the elongate guide when the crank is halfway between the first position and the second position.

Optionally, a releasable coupling may be provided to couple the elongate guide to the hatch. This can improve the safety of the access station, due to the ability to disengage the mechanism in case of unwanted interference with the hatch system mechanism. For example, if an arm of an operator or a partially removed item is inside the container compartment when it should not be there, the mechanism of the hatch system will not close the hatch as the elongate guide becomes detached from the hatch cover, preventing the mechanism of the hatch system from closing the hatch. Optionally, the releasable coupling may comprise one or more magnets or other releasable means to couple the elongate guide to the hatch.

Optionally, an automated storage and retrieval system may comprise an access station. The automated storage and retrieval system may comprise storage containers arranged to be stackable in stacks within the storage columns. The automated storage and retrieval system may comprise container handling vehicles for moving storage containers between a storage position within one of the storage columns and the access station.

Optionally, a method for presenting a storage container in an access station of an automated storage and retrieval system may comprise steps of: receiving the storage container in a container compartment of the access station, wherein the access station comprises a panel with an access aperture for providing access to the container compartment and wherein the access aperture is closed by a hatch cover; rotating a crank around its first end from a first position to a second position while allowing its second end to reciprocate in an elongate guide of the hatch cover; thereby moving the hatch cover from the access aperture.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a cross-sectional side view of an access station;
Fig. 6 shows a perspective view of another access station;
Fig. 7 shows a top view of an embodiment of the access station. The hatch is here closed.
Fig. 8 shows the access station of Fig. 7, where the hatch has started to open.
Fig. 9 shows the access station of Fig. 8, where the hatch is almost entirely open.
Fig. 10 shows an enlarged view of the hatch system of Fig. 9.
Fig. 11 shows the access station of Fig. 9, where the hatch is entirely open.
Fig. 12 shows an enlarged view of the hatch system of Fig. 11.
Fig. 13 shows a schematic top view of the slider and the engagement between the slider and the crank.
Fig. 14 shows a schematic side view of the slider and the engagement between the slider and the crank.
Fig. 15 shows a front view of the hatch system, the top panel and parts of the access station frame of the access station.

### DETAILED DESCRIPTION

In overview, the disclosure relates to an access station for accessing a storage container of an automated storage and retrieval system. The access station comprises a panel with an access aperture providing access to a container compartment, a hatch system for opening and closing the access aperture of the panel. The hatch system comprises a hatch cover movable between a closed state in which the hatch cover is preventing access to the container compartment via the access aperture of the panel and an open state in which the hatch cover is allowing access to the container compartment via the access aperture of the panel. The access station includes a crank having a first end and a second end, wherein the second end of the crank is reciprocating in an elongate guide which is attached to the hatch cover and an actuator configured to move the hatch cover between the closed state and the open state by rotating the crank between a first position and a second position.

### Automated storage and retrieval system overview

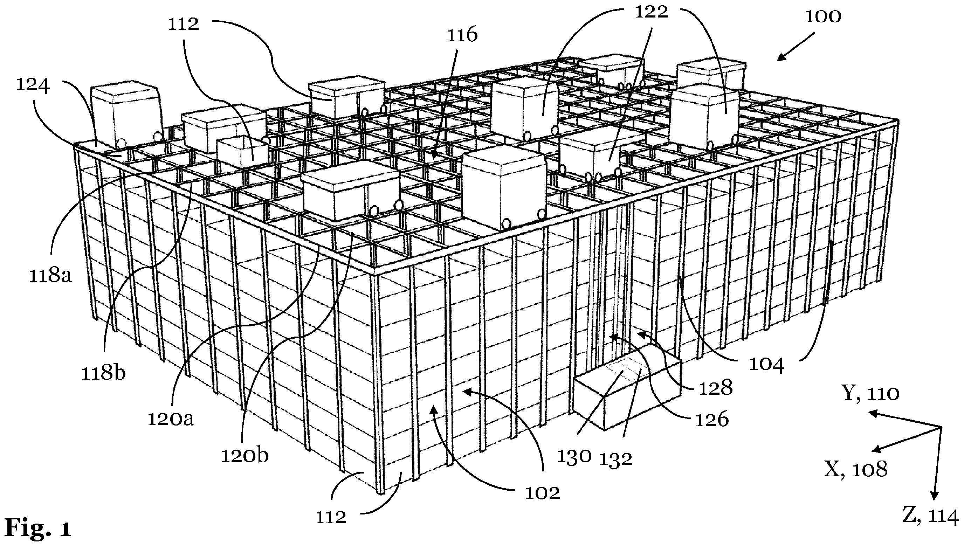

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 maybe transported to a port of another grid on the same or another level, or to an external facility. Transport of bins 112 to and from ports 130, 132 may be by any appropriate means (not shown) including conveyors, transport vehicles, lifts or robots.

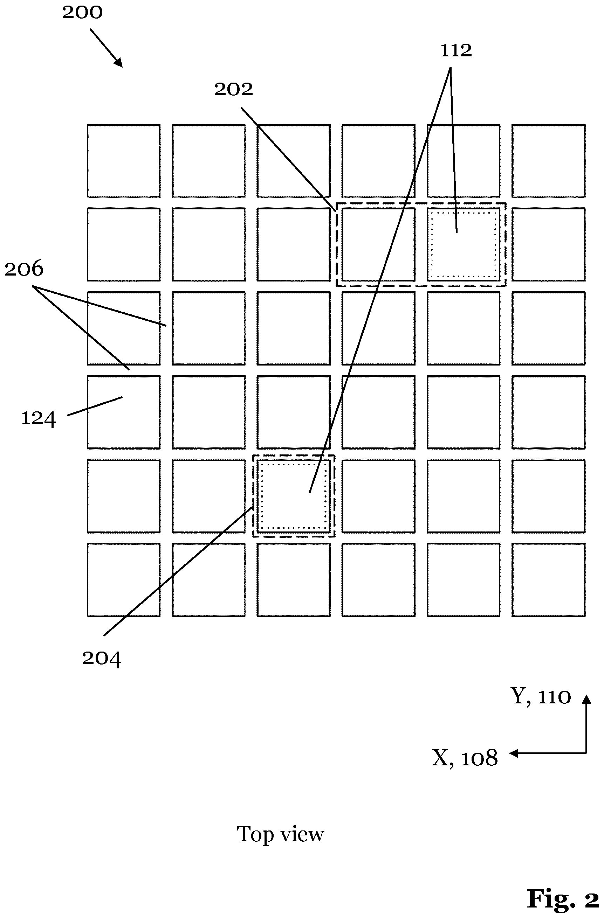

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

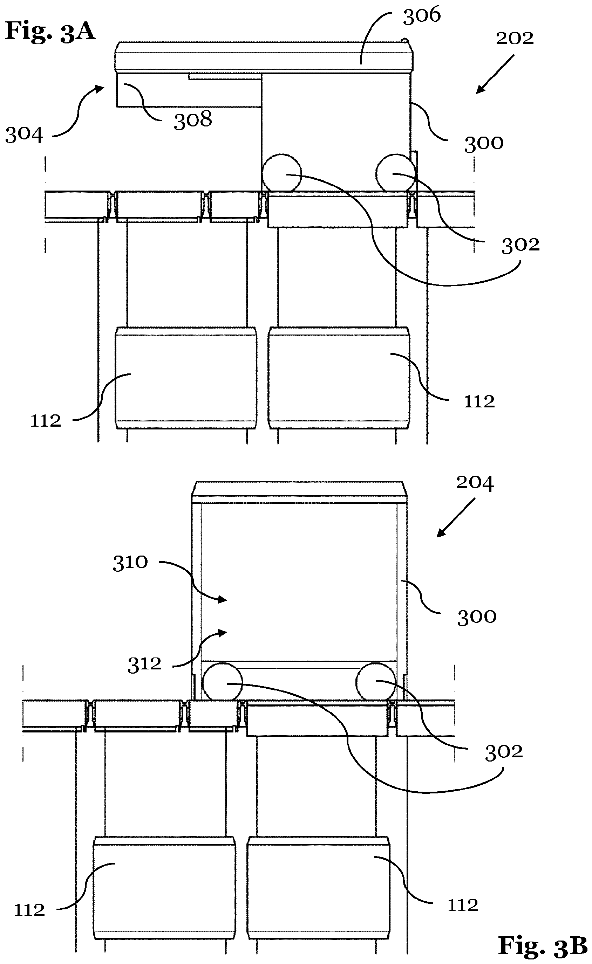

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

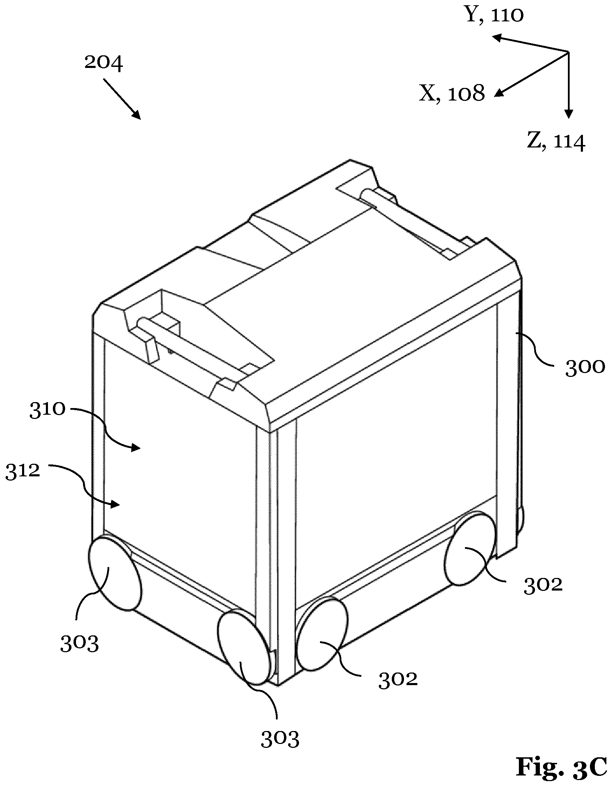

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

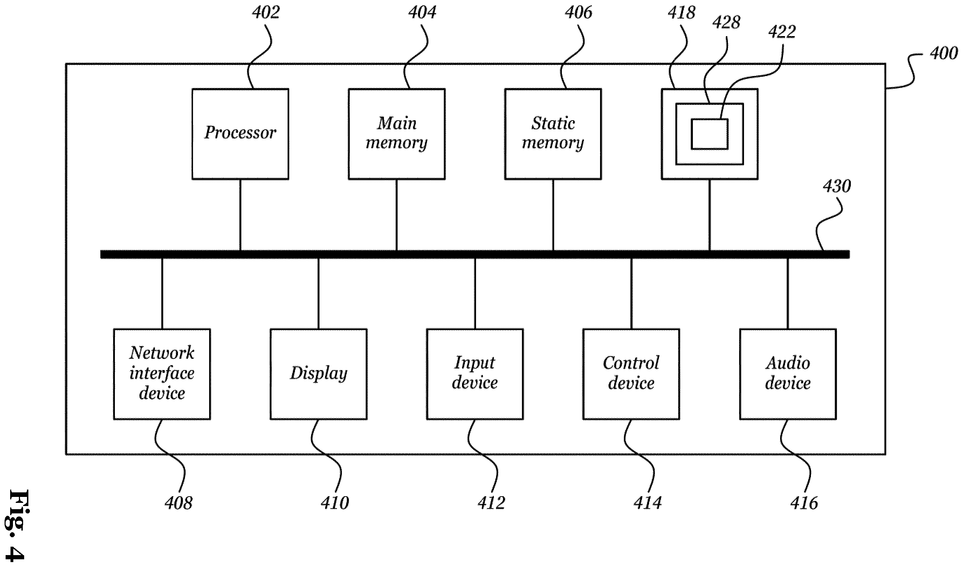

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Access station overview

An access station is a work station in which an operator can add contents to or remove contents from bins in order to add contents to or remove contents from the grid.

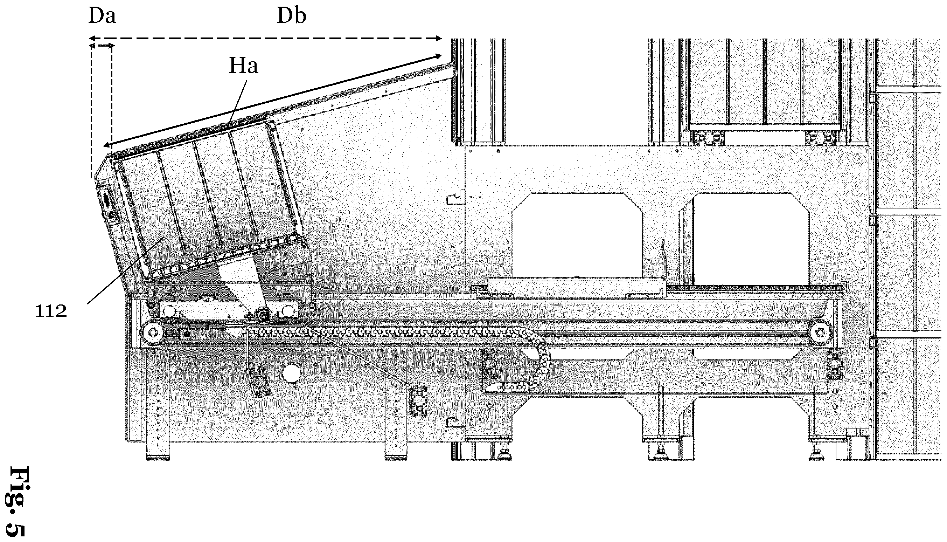

Fig. 5 is an illustration of an access station described in WO2022106286. Here, the hatch system is integrated on the underside of the top cover of the access station, on each side of the storage container. Here, the hatch system is moving the hatch Ha away from the operator when opened, and is moving the hatch towards the operator when closed (indicated by solid two-way arrow). For ergonomic reasons, the storage container is pivoted or tilted towards the operator in a presentation position. The distance Da between the front panel and storage container is relatively short. However, as the hatch is moved away from the operator, a distance Db between the front panel and the framework structure is relatively long, due to the size of the hatch itself.

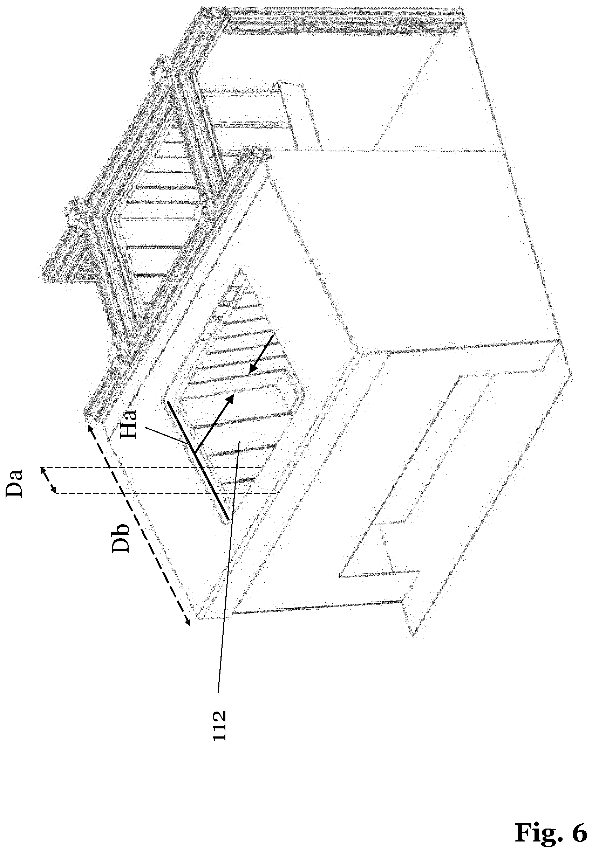

Fig. 6 is an illustration of an access station described in WO2021259644. Here, the hatch Ha comprises two half-sections moving towards each other when closing, and moving away from each other when opening (as indicated by solid lines). The hatch system is here located on the rear side of the front panel. An advantage with this access station is that the distance Db is shorter than in Fig. 5 such that the overall size of the access station is smaller than that described in WO2022106286. A disadvantage is that the distance Da is longer than in Fig. 5.

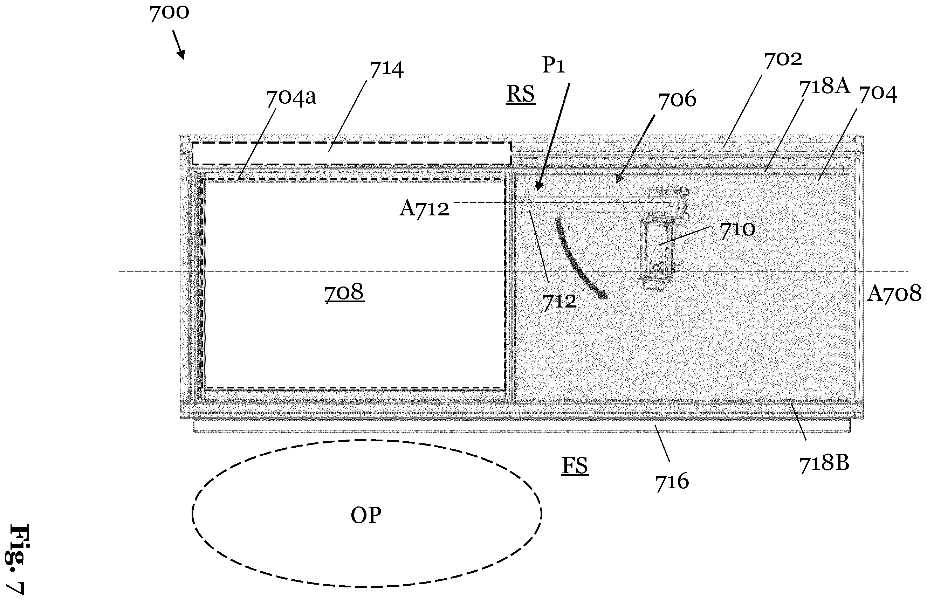

An embodiment of an access station 700 for the automated storage and retrieval system 100 will now be discussed with reference to Figs. 7-11. The access station 700 comprises a structural internal access station frame 702 formed for example of elongate metal members. The access station 700 may be a generally cuboidal shape and the access station frame 702 may be a similar shape to the access station 700 with panels to enclose the frame 702 and form the access station 700. Within the access station frame 702, there maybe one or more container compartments 1102. Each container compartment 1102 may hold one or more storage containers 112, which may also be called bins. The storage containers 112 may be a rectangular box which has space to hold one or more goods. The container compartment 1102 may be a suitable shape to hold the one or more storage containers 112 adjacent to one another.

The access station 700 allows an operator OP to add content to, or remove content from, storage containers 112. This allows for storage of content into, or retrieval of content from, the grid 100. Storage containers 112 are movable inside the access station 700 in order to be delivered to and taken from the container compartment 1102. The contents of a storage container 112 may be accessible from above via an access aperture 704a to an operator OP when the storage container 112 is within a container compartment 1102.

As shown in Fig. 7, the access station 700 comprises a panel 704 with an access aperture 704a providing access to a container compartment 1102. The panel 704 may cover the access station frame 702. The access aperture 704a may be a generally rectangular-shaped cut-out of the panel 704 with a similar length and width to the storage container 112 so that an operator OP has unhindered access to the storage container 112 below. The access aperture 704a allows the operator OP means of access to a container compartment 1102 in order to input goods into or take goods out of the storage container 112 inside the container compartment 1102. If the access aperture 704a has the same length and width as, or is larger than, the storage container 112, and the access aperture 704a and the storage container 112 are centered about the same lateral point, the access aperture 704a may completely reveal the contents of a storage container 112 inside the container compartment 1102.

### Hatch system

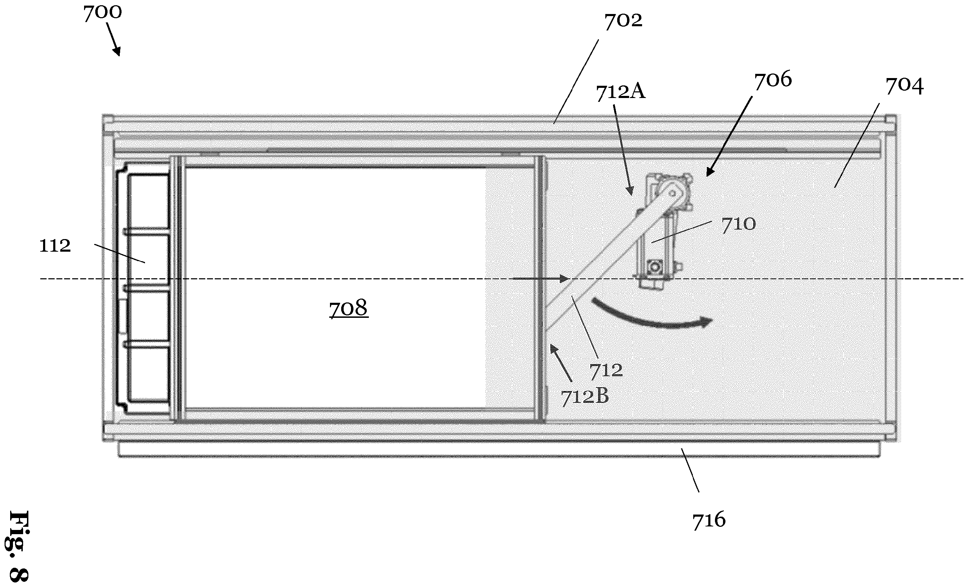

The access station 700 comprises a hatch system 706 for opening and closing the access aperture 704a of the panel 704. The panel 704 is displayed in Fig. 7 and Fig. 8 in a semi-transparent grey in order to show the hatch system 706. The hatch system 706 comprises a hatch cover 708, a crank 712 and an actuator 710.

The hatch cover 708 of the hatch system 706 is movable between a closed state, in which the hatch cover 708 is preventing access to the container compartment 1102 via the access aperture 704a of the panel 704, and an open state, in which the hatch cover 708 is allowing access to the container compartment 1102 via the access aperture 704a of the panel 704. Fig. 7 illustrates a closed state of the hatch cover 708. The hatch cover 708 may be a thin rectangular plate and may be the same size as or be a greater size than the access aperture 704a, stopping access of the operator OP to the container compartment 1102 through the access aperture 704a when the hatch cover 708 is in the closed state. The hatch cover 708 may be movable in a linear direction A708 between its open state and its closed state. The hatch cover 708 may rest on two sliding profiles 718A, 718B both oriented parallel to the linear direction A708 of the movable hatch cover 708.

The hatch cover 708 may be movable using a crank 712 and an actuator 710. The crank 712 may be formed as an elongate linear arm that provides a coupling between the actuator 710 at one end and the hatch cover 708 at the other end of crank 712. The actuator 710 may be a rotary actuator and may initiate movement of the crank 712 in order to move the hatch cover 708. The actuator 710 is configured to move the hatch cover 708 between the closed state and the open state by rotating the crank 712 between a first position P1 and a second position P2. In Fig. 7 the crank 712 is in a first position P1, where the longitudinal axis A712 of the crank 712 may be parallel to the linear direction A708 of movement of the hatch cover 708.

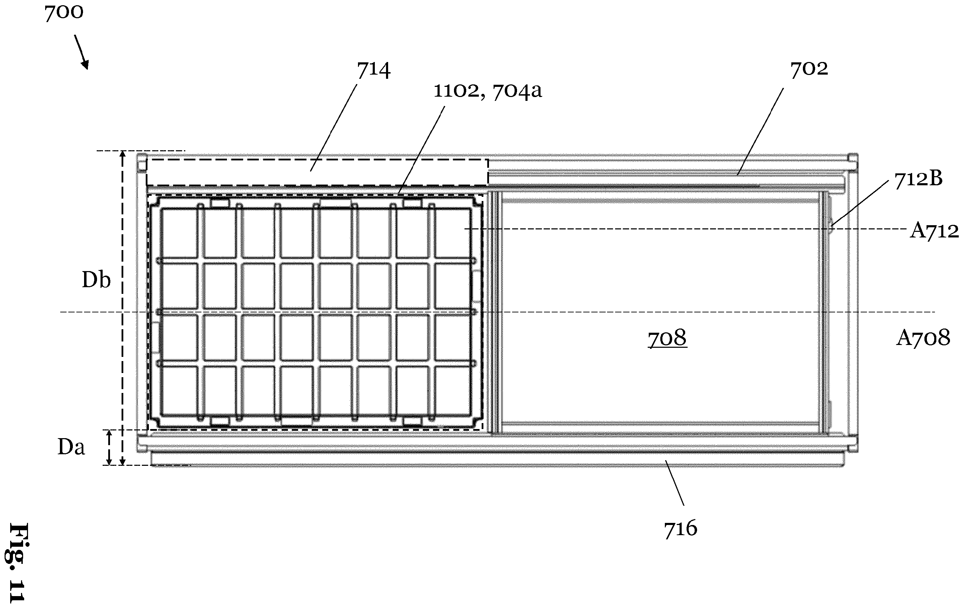

The rear side RS of the access station 700 may comprise a rear opening 714 below the panel 704. The rear opening 714 maybe used to deliver storage containers 112 into and out from the container compartment 1102 (see for example Fig. 11) of the access station 700. Therefore the rear opening 714 may be slightly larger than the relevant cross-section of a storage container 112, such that the storage container 112 may pass through. The storage containers 112 may also move into and out from the container compartment 1102 through another opening of the access station 700, instead of or as well as the rear opening 714. For example, the storage containers 112 may move into and/or out from the container compartment 1102 via an opening on the left and/or right side of the access station 700 and may move from side to side within the access station 700. The rear opening 714 may be provided in a plane parallel with the linear direction A708 of the hatch cover 708.

When the hatch cover 708 is in its closed state, as shown in Fig. 7, the hatch cover 708 may completely cover the container compartment 1102, preventing the operator OP access to the container compartment 1102. Fig. 7 illustrates the OP on the front side FS of the access station 700, next to the front panel 716. When the hatch cover 708 is in its open state, the operator OP may be able to reach inside the access aperture 704a of the panel 704 to move goods into or out of a storage container 112 inside the container compartment 1102, otherwise covered by the hatch cover 708. The front side FS of the access station 700 is side of the access station 700 facing the operator OP, however the front side FS could be on any side of the access station 700. The rear side RS may be on the opposite side of the access station 700 to the front side FS.

Fig. 8 shows the access station 700 of Fig. 7, but with the hatch cover 708 partially open as the actuator initiates its rotation to open up the access aperture 704a of the panel 704. In Figs. 7-12, the hatch cover 708 is movable linearly from left to right inside the access station 700, however the hatch cover 708 may be movable in a different direction. As the hatch cover 708 is moved slightly from the closed state within the access station 700, the storage container 112 underneath the hatch cover 708 is partly revealed. The hatch cover 708 in its closed state may conceal a storage container 112 by being above, below or on the side of the storage container 112. The crank 712 has a first end 712A attached to the actuator 710 and a second end 712B attached to the hatch cover. The crank 712 may be defined with a longitudinal axis A712 between its first end 712A and its second end 712B.

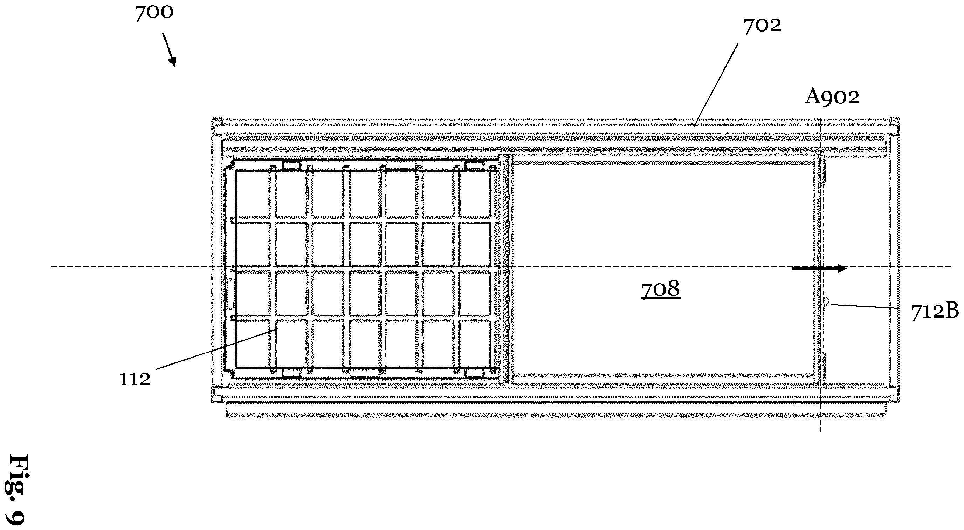

Fig. 9 shows the access station 700 of Fig. 8, but with the hatch cover 708 almost entirely open. As the hatch cover 708 is almost entirely open, most of the opening of the storage container 112 is revealed by the access aperture 704a of the panel 704.

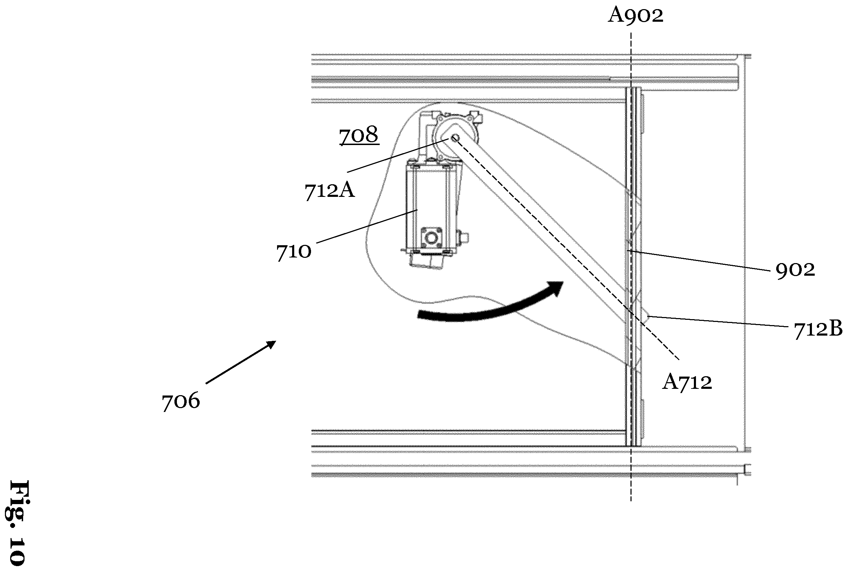

Fig. 10 shows an enlarged view of the hatch system of Fig. 9, where the hatch is partially transparent. The second end 712B of the crank 712, distal to the actuator 710, reciprocates in an elongate guide 902 which is attached to the hatch cover 708. The elongate guide 902 may be formed as a generally rectangular open channel. The motion initiated by the actuator 710, attached to the first end 712A of the crank 712, causes the crank to rotate, in this example in an anticlockwise direction. As the crank 712 rotates, the second end 712B of the crank can slide within the elongate guide 902. This movement causes the elongate guide and the hatch cover 708 to which is it attached to move in a linear direction thereby opening the access aperture 704a. The elongate guide 902 maybe oriented with its longitudinal axis A902 being perpendicular to the linear direction A708 of the hatch cover 708. Fig. 10 illustrates a possible lateral movement of the second end 712B of the crank 712 within the elongate guide 902. However, the direction of the movement within the elongate guide can vary depending on the orientation and relative locations of the elongate guide 902, the hatch cover 708 and the actuator 710. The elongate guide 902 may be located along one edge of the hatch cover 708, as illustrated in Fig. 10. Alternatively, the elongate guide may be located on any part of the hatch cover 708 that still allows the movement of the hatch cover 708 between an open and closed state.

Fig. 11 shows the access station 700 of Fig. 9 in a configuration where the hatch cover 708 is entirely open. When the hatch cover 708 is moved from a closed state as shown in Fig. 7 to an open state as shown in Fig. 11, the crank 712 rotates approximately 180 degrees. This may expose the entire opening of the storage container 112 to the operator OP through the access aperture 704a of the panel 704. The operator OP may then be able to move goods into or out of the storage container 112 inside the container compartment 1102.

The crank 712 may instead rotate less than 180 degrees between the first position P1 and second position P2 of the crank 712, leaving some of the opening of the storage container 112 still concealed. The storage container 112 may also be offset laterally relative to the hatch cover 708 in its closed state, such that even if the crank rotates 180 degrees to the open state of the hatch cover 708, some of the opening of the storage container 112 will still be concealed. This acts as a safety feature for the operator OP, such that the operator cannot easily remove the storage container 112 from the container compartment 1102, as the access aperture 704a is smaller than the relevant cross-section of the storage container 112. This reduces the exposure of the operator OP to the mechanism of the hatch system 706, and therefore reduces the likelihood of injury.

In Fig. 11, the labelled first distance Da is the distance between the front side of the front panel 716 and the closest side of the access aperture 704a of the panel 704. The labelled second distance Db is the distance between the front side of the front panel 716 and the rear side of the access station 700. Using the here disclosed hatch system 706, the labelled first distance Da and the labelled second distance Db are decreased compared to known access stations, as shown in Figs. 5 and 6. A short labelled first distance Da allows for more ergonomic access to the access station 700. With a short labelled first distance Da, the operator OP may be able to add or remove contents to or from the bins, or add or remove bins themselves, in a more ergonomic way as the operator OP is closer to the front panel 716 of the access station 700.

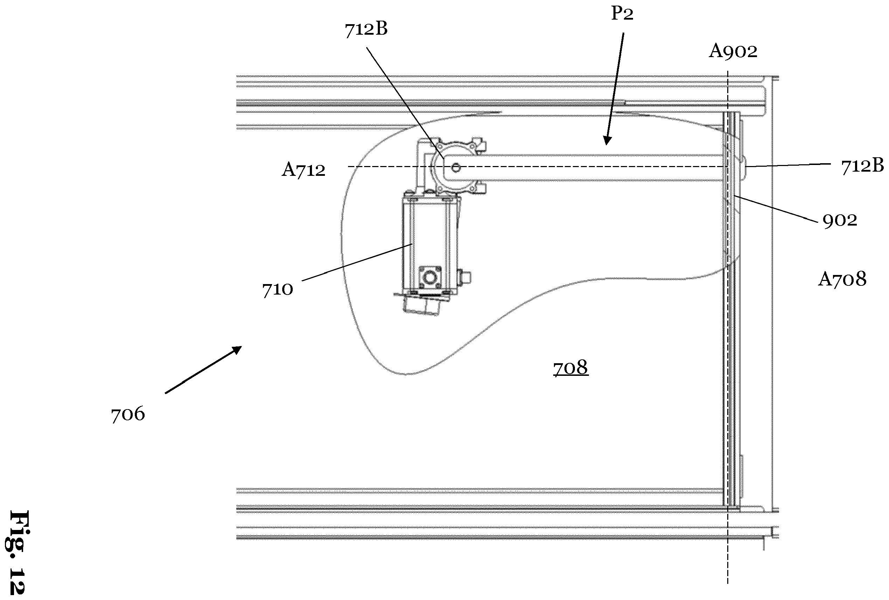

Fig. 12 is an enlarged view of the hatch system 706 of Fig 11, where the hatch is partially transparent. Fig. 12 is similar to Fig. 10, however the hatch cover 708 is in a fully open state. The crank 712 is in a second position P2 having rotated 180 degrees from its starting position. As illustrated in Fig. 12, the longitudinal axis A712 of the crank 712 may be orientated perpendicular to the longitudinal axis A902 of the elongate guide 902 when the hatch cover 708 is in the closed state and/or open state. This improves the safety of the hatch system 706 for the operator as it increases the resistance of the hatch cover 708 when in the closed and/or open state such that the user may not interfere with the mechanism of the hatch system 706.

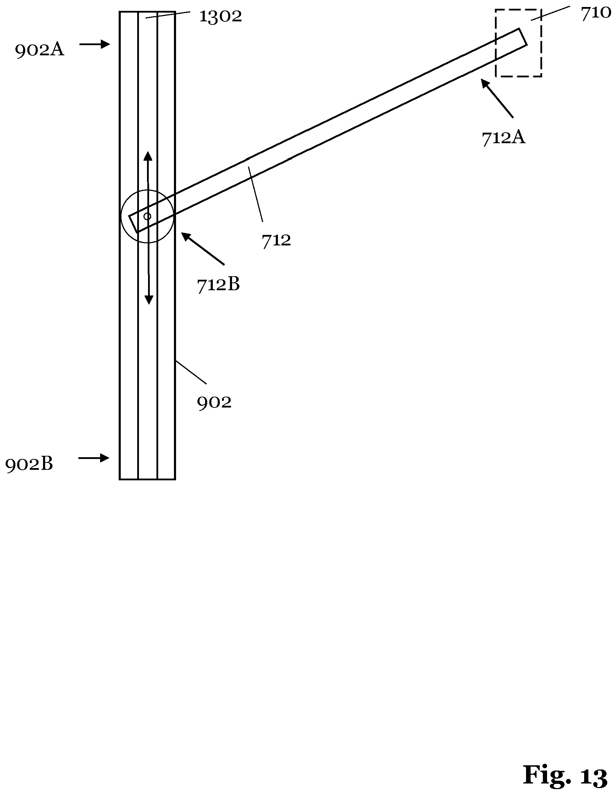

Fig. 13 is a schematic top view of the elongate guide 902 and the engagement between the elongate guide 902 and the crank 712. The elongate guide 902 comprises a groove 1302 such that the second end 712B of the crank 712, which may comprise a corresponding pivotally attached slider, can slide along the elongate guide 902. The second end 712B of the crank 712 may be located in a first position 902A of the elongate guide 902 towards one end of the elongate guide 902 when the crank 712 is in the first position P1 and when the crank 712 is in the second position P2, i.e. when the hatch cover 708 is in a fully closed or open state, respectively. The second end 712B of the crank 712 maybe located in the second end position 902B of the elongate guide 902 when the crank 712 is halfway between the first position P1 and the second position P2.

The elongate guide 1302 may be releasably coupled to the hatch cover 708 for safety purposes. The releasable coupling may allow for the elongate guide 902 to be detached from the hatch cover 708 if any interference to access station 700 occurs. For example, if an arm of an operator OP or an item is not fully removed from the container such that it is inside the container compartment 1102 when it should not be there, the mechanism of the hatch system 706 will not move the hatch cover 708 as the elongate guide 902 becomes detached from the hatch cover 708. The releasable coupling could be implemented using one or more magnets attached to the elongate guide 902. Alternative releasable couplings could be used, for example a ball catch lock mechanism.

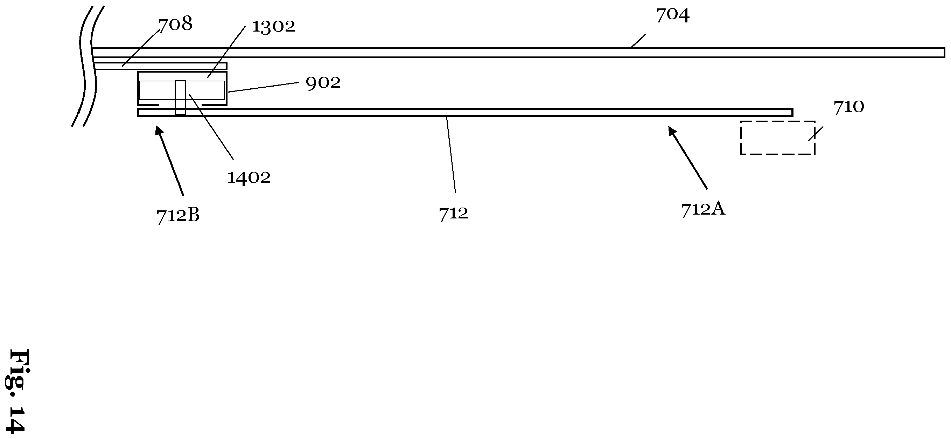

Fig. 14 is a schematic side view of the elongate guide 902 and the engagement between the elongate guide 902 and the crank 712. The second end 712B of the crank 712 is provided with a sliding element 1402 slidingly engaged in the groove 1302 of the elongate guide 902. The sliding element 1402 is shown in Fig. 14 as having rectangular element which is pivotally attached to the crank with a pin. However the sliding element 1402 could be any suitable sliding element, for example a ball bearing or similar to allow it to slide along the groove 1302. Fig. 14 shows the crank 712 as being below the hatch cover 708, however this sliding mechanism may work with any relative orientation of the crank 712 and the hatch cover 708.

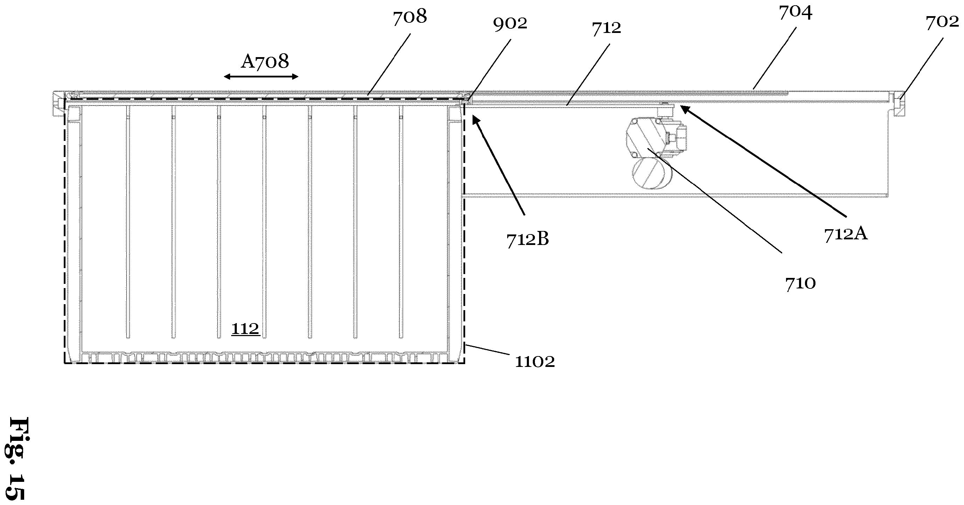

Fig. 15 shows a front view of the hatch system 706, the top panel 704 and parts of the access station frame 702 of the access station 700. A storage container 112 is illustrated inside a container compartment 1102. The panel 704 is shown in Fig. 15 as oriented in the horizontal plane, however it is also possible to orient the panel 704 in an inclined plane or any other orientation.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### LIST OF REFERENCE NUMBERS

- 100: Automated storage and retrieval system
- 102: Vertical column
- 104: Vertical frame member
- X, 108: X direction
- Y, 110: Y direction
- 112: Storage container
- Z, 114: Z direction
- 116: Rail system
- 118a, 118b: Pairs of vehicle rails
- 120a, 120b: Pairs of vehicle tracks
- 122: Robotic container-handling vehicle
- 124: Access opening
- 126,128: Port columns
- 130, 132: Ports
- 200: X-Y configuration of rail system 116
- 202, 204: Robot
- 206: Rail
- 300: Body of robots 202, 204
- 302: Wheels of robots 202, 204
- 303: Second set of wheels
- 304, 312: Lifting device of robots 202, 204
- 306: Cantilever element of lifting device 304
- 308: Gripping device of robot 202
- 310: Internal cavity in the body 300
- 400: Data storage device
- 402: Processor
- 404: Main memory
- 406: Static memory
- 408: Network interface device
- 410: Display
- 412: Input device
- 414: Control device
- 416: Audio device
- 418: Data storage device
- 422: Instructions
- 428: Computer-readable storage media
- 430: Bus
- Da: First distance
- Db: Second distance
- Ha: Hatch
- 700: Access station
- 702: Access station frame
- 704: Panel
- 704a: Access aperture
- 706: Hatch system
- 708: Hatch cover
- A708: Linear direction of hatch cover 708
- 710: Actuator
- 712: Crank
- 712A: First end of crank 712
- 712B: Second end of crank 712
- A712: Longitudinal axis between first 712A and second end of crank 712B
- 714: Rear opening of access station frame 702
- 716: Front panel of access station 700
- 718A, 718B: Sliding profiles
- P1: First position of crank 712
- FS: Front side of access station 700
- RS: Rear side of access station 700
- OP: Operator
- A902: Longitudinal axis of elongate guide 902
- 902: Elongate guide
- 902A: First end position of elongate guide 902
- 902B: Second end position of elongate guide 902
- 1102: Container compartment
- P2: Second position of crank 712
- 1302: Groove of elongate guide 902
- 1402: Sliding element of crank 712

## Claims

1. An access station (700) for accessing a storage container (112) of an automated storage and retrieval system (100), wherein the access station (700) comprises:
- a panel (704) with an access aperture (704a) providing access to a container compartment (1102); and
- a hatch system (706) for opening and closing the access aperture (704a) of the panel (704), wherein the hatch system (706) comprises:
- a hatch cover (708) movable between a closed state in which the hatch cover (708) is preventing access to the container compartment (1102) via the access aperture (704a) of the panel (704) and an open state in which the hatch cover (708) is allowing access to the container compartment (1102) via the access aperture (704a) of the panel (704);
- a crank (712) having a first end (712A) and a second end (712B), wherein the second end (712B) of the crank (712) is reciprocating in an elongate guide (902) which is attached to the hatch cover (708); and
- an actuator (710) configured to move the hatch cover (708) between the closed state and the open state by rotating the crank (712) between a first position and a second position.

2. An access station (700) according to claim 1, wherein the hatch cover (708) is movable in a linear direction (A708) between its open state and its closed state.

3. An access station (700) according to claim 1 or 2, wherein the hatch cover (708) rests on two sliding profiles both oriented parallel to the linear direction (A708) of the movable hatch cover (708).

4. An access station (700) according to any of claims 1 to 3, wherein the elongate guide (902) is oriented with its longitudinal axis (A902) being perpendicular to the linear direction (A708) of the hatch cover (708).

5. An access station (700) according to any of claims 1 to 4, wherein the elongate guide (902) is located along one edge of the hatch cover (708).

6. An access station (700) according to any of claims 1 to 5, wherein:
- the crank (712) is defined with a longitudinal axis (A712) between its first end (712A) and its second end (712B); and
- the longitudinal axis (A712) of the crank (712) is oriented perpendicular to the longitudinal axis (A902) of the elongate guide (902) when the hatch cover (708) is in the closed state; and/or
- the longitudinal axis (A712) of the crank (712) is oriented perpendicular to the longitudinal axis (A902) of the elongate guide (902) when the hatch cover (708) is in the open state.

7. An access station (700) according to any of the preceding claims, comprises a rear opening (714) provided below the panel (704) on a rear side (RS) of the access station (700), wherein storage containers (112) are moved into and out from the container compartment (1102) of the access station (700) via the rear opening (714).

8. An access station (700) according to any of the preceding claims, wherein the rear opening (714) is provided in a plane parallel with the linear direction (A708) of the hatch cover (708).

9. An access station (700) according to any of the preceding claims, wherein the crank (712) is rotated up to 180° between the first position and the second position.

10. An access station (700) according to any of the preceding claims, wherein the elongate guide (902) comprises a groove (1302), and wherein the second end (712B) of the crank (712) is provided with a sliding element (1402) slidingly engaged in the groove (1302).
10.An access station (700) according to any of the preceding claims, wherein the second end (712B) of the crank (712) is located in a first end position (902A) of the elongate guide (902) when the crank (712) is in the first position (P1) and when the crank (712) is in the second position (P2) and wherein the second end (712B) of the crank (712) is located in a second end position (902B) of the elongate guide (902) when the crank (712) is halfway between the first position (P1) and the second position (P2).

11. An access station (700) according to any of the preceding claims, wherein a releasable coupling is provided to couple the elongate guide to the hatch.

12. An access station according to claim 13, wherein the releasable coupling comprises one or more magnets.

13. An automated storage and retrieval system (100) comprising an access station (700) according to any of the preceding claims.

14. A method for presenting a storage container (112) in an access station (700) of an automated storage and retrieval system (100), wherein the method comprises the steps of:
- receiving the storage container (112) in a container compartment (1102) of the access station (700), wherein the access station (700) comprises a panel (704) with an access aperture (704a) for providing access to the container compartment (1102) and wherein the access aperture (704a) is closed by a hatch cover (708);
- rotating a crank (712) around its first end (712A) from a first position to a second position while allowing its second end (712B) to reciprocate in an elongate guide (902) of the hatch cover (708); thereby moving the hatch cover (708) from the access aperture (704a).
